# EUROPEAN PATENT APPLICATION

(11) **EP 4 660 500 A1**
(43) Date of publication of application: **10.12.2025**
(21) Application number: 25180443.1
(22) Date of filing: 03.06.2025
(51) Int. Cl.: F16L 5/04, A62C 2/06

(54) **FIRE-RETARDANT ELEMENT AND METHOD FOR FEEDING A CONDUIT ELEMENT THROUGH A CONSTRUCTION ELEMENT**

(30) Priority: 03.06.2024 NL 2037851
(71) Applicant: Flammix Solutions B.V., 1175 LC Lijnden (NL)
(72) Inventor: Demirayak, Mustafa, 1175 LC Lijnden (NL)
(74) Representative: Arnold & Siedsma

(57) **Abstract**

Fire-retardant element for sealing an opening in a construction element in the case of fire, comprising a collar which is manufactured integrally from an intumescent material and is configured to be placed around a conduit element which runs through the opening of the construction element, wherein the intumescent material is flexible and the collar comprises an interruption along its periphery, such that the collar can be bent apart and can be placed around the conduit element, and wherein the collar comprises a wall-shaped part along at least a part of its inner periphery, which lies during use against the conduit element, which extends in a direction substantially parallel to a longitudinal direction of the conduit element so that the wall-shaped part extends in the opening of the construction element between the construction element and the conduit element in order to fix the fire-retardant element clampingly in the construction element and against the conduit element.

## Description

The present invention relates to a fire-retardant and/or fire-resistant element, particularly a fire-retardant construction element, and preferably a fire-retardant collar. The invention also relates to a method for feeding a conduit element through a construction element, wherein use is made of the fire-retardant and/or fire-resistant element.

According to current building regulations, a space in a building where a fire starts must be able to withstand this fire for a determined amount of time before the fire is able to spread to an adjacent space or the outside area. As a result, construction materials and/or elements that are used must be manufactured such that they are able to withstand fire for at least a predetermined amount of time before they fail. Nowadays, many buildings are constructed at least partially from (prefab) construction elements. Construction elements can for instance be walls, floors, ceilings or parts thereof.

A drawback in some buildings can be that construction elements must still be adapted during construction, or at a later time after construction has been completed, to facilities to be installed, such as electrics, plumbing, ventilation, heating, internet provisions and other installations. The construction elements must hereby in some cases be drilled through, or the structural integrity thereof must be otherwise modified in order to accommodate these installations. This usually has an adverse effect on the fire-retardant properties of such a construction element. Providing a passage through a wall element for feeding through a conduit for example has the result that fire is able to penetrate through this wall element more quickly. This is the case particularly when the conduit is made from a material which melts relatively quickly, such as various plastics (e.g. PVC), or disintegrates when heated.

Gaps between the construction elements and conduit elements can be filled with fire-resistant and/or fire-retardant material. An example of a fire-retardant material is a so-called intumescent material. Intumescent material, also referred to as "an intumescent", is material that swells up when exposed to heat, whereby the material increases in volume and decreases in density.

Such intumescents or other fire-retardant measures must be applied at all passages through construction elements in order to satisfy current safety requirements. A drawback is here that arranging such materials is very time-consuming and the construction costs of a building are significantly increased thereby.

The present invention has for its object, among other objects, to obviate the stated drawbacks at least partially. According to a first aspect, a fire-retardant element is for this purpose provided for sealing an opening in a construction element in the case of fire, comprising a collar which is manufactured integrally from an intumescent material and is configured to be placed around a conduit element, wherein the conduit element runs through the opening of the construction element, wherein the intumescent material is flexible and the collar comprises an interruption along its periphery, such that the collar can be bent apart and can be placed around the conduit element, and wherein the collar comprises a wall-shaped part along at least a part of its inner periphery, which lies against the conduit element during use, wherein the wall-shaped part extends in a direction substantially parallel to a longitudinal direction of the conduit element so that, in use of the fire-retardant element, the wall-shaped part extends in the opening of the construction element between the construction element and the conduit element in order to fix the fire-retardant element clampingly in the construction element and against the conduit element.

The fire-retardant element according to the first aspect above enables a significant time saving during installation of fire-retardant measures, since it can be placed around a conduit element in one operation and can subsequently be fixed with one operation. The single interruption, for instance one cut, in the collar in combination with the flexible material particularly has the result that the collar can be bent apart. After being bent apart, the collar can be placed around the conduit element, after which it is positioned form-fittingly around the conduit element. The collar can then be pressed down toward the construction element, wherein the wall-shaped part clamps becomes clamped between the conduit element and the construction element. The fire-retardant element is now fixed relative to the conduit element and the construction element thereby. This results in few to no further fastening means being required. The fire-retardant element is also referred to as fire-retardant collar or simply collar.

The wall-shaped part preferably extends along the whole inner periphery of the collar. Hereby, an excellent clamping between the fire-retardant element and the construction element is brought about and an excellent fire-retardant action is achieved.

The intumescent material preferably comprises at least one of graphite and sodium silicate. The intumescent material preferably further comprises a flexible component, such as a flexible polymer (e.g. an elastomer). The intumescent material can for instance be a combination of an elastomer, sodium silicate and graphite. The intumescent material is preferably also resilient, so that it tends toward a closed collar shape, and thereby tends to connect to the conduit element.

The wall-shaped part preferably comprises on its outer side one or more protrusions along its outer periphery. The one or more protrusions are more preferably elongate protrusions, wherein the longitudinal direction of the one or more elongate protrusions runs substantially parallel to the longitudinal direction of the conduit element. A plurality of the one or more protrusions are more preferably arranged around the outer periphery of the wall-shaped part at regular mutual distances. When the wall-shaped part is pressed down between the construction element and the conduit element, the protrusions are compressed and generate on one hand a clamping action and/or additional friction. On the other hand, the protrusions do not cause too much friction either, so that installation of the collar does not require an excessive amount of force, as would be the case in a wall-shaped part which must be pressed down in its entirety during installation.

The collar preferably comprises a flange which extends outward from the wall-shaped part in radial direction of the wall-shaped part. In use of the fire-retardant element the flange more preferably lies flat against the construction element in order to seal a possible space between the wall-shaped part of the collar and the construction element. The flange more preferably comprises a notch in order to enable bending apart of the collar at the position of the notch, such that the collar can be bent apart and can be placed around the conduit element. The notch is for instance a V-shaped notch. The outer periphery of the flange is more preferably hexagonal. A hexagonal form can be realized in simple manner with straight cuts, this in contrast to for instance a round form, so that a plurality of fire-retardant elements can be manufactured integrally at the same time, and can later be separated from each other. A hexagon is also an efficient shape for filling a surface, this being advantageous for the manufacture but also for storage of the fire-retardant elements.

The inner periphery of the wall-shaped part is preferably substantially round, such that the fire-retardant element can be arranged fittingly around a round conduit element. The inner periphery can of course also have a different shape, for instance when the relevant conduit element has a different (non-round) outer periphery.

At least a part of the inner surface of the wall-shaped part is preferably provided along at least a part of the inner periphery with a sealing material, such as rubber or an elastomer. A substantially airtight seal between the conduit element and the collar is obtained hereby. This for instance prevents smoke and/or gases from moving between the conduit element and the collar, and to another space. The sealing material preferably lies adjacently of the flange of the collar, i.e. the front surface of the collar. The sealing material is preferably provided along the whole inner periphery of the collar, and more preferably over only a part of the whole inner surface of the wall-shaped part, so that the sealing material does not cause too much friction during installation of the collar, and particularly during clamping of the wall-shaped part of the collar between the conduit element and the wall.

At least a part of the outer surface of the wall-shaped part is preferably provided along at least a part of the outer periphery with a sealing material, such as rubber or an elastomer. A substantially airtight seal between the wall and the collar is obtained hereby. Just as the seal on the inner surface of the wall-shaped part, as discussed above, smoke and/or gasses are thereby for instance prevented from moving between the wall and the collar to another space.

The flange can also be provided with a sealing material, preferably over at least a part of the rear surface thereof which, during use, is directed toward the wall and lies thereagainst and/or the peripheral edge of the flange.

An inner diameter of the wall-shaped part preferably corresponds substantially with an outer diameter of the conduit element. As a result, the fire-retardant element connects closely to the conduit element.

According to a second aspect the invention provides a method for feeding a conduit element through a construction element, comprising the steps of:
- arranging an opening in the construction element;
- feeding a conduit element through the arranged opening, wherein an outer diameter of the conduit element is smaller than a diameter of the opening, such that a gap is formed between the arranged opening and the conduit element;
- providing a fire-retardant element according to the first aspect of the present invention;
- bending apart the fire-retardant element and subsequently placing it around the conduit element; and
- pressing down the fire-retardant element toward the construction element, such that the wall-shaped part makes its way into the opening between the construction element and the conduit element.

The method according to the second aspect fireproofs the feeding of a conduit element through a construction element without this significantly extending the construction time of a building. Providing the fire-retardant element preferably comprises of providing a fire-retardant element with a flange which extends outward from the wall-shaped part in radial direction of the wall-shaped part, wherein the step of pressing down the fire-retardant element is performed such that the flange lies flat against the construction element. This has the advantages as discussed above.

Providing, bending apart and pressing down of the fire-retardant element are preferably performed manually. In other words, no tools and/or fastening means are required when providing, bending apart and pressing down the fire-retardant element. This saves both time and costs.

The step of providing the fire-retardant element preferably comprises of providing a first fire-retardant element and a second fire-retardant element, wherein the steps of providing, bending apart and pressing down are performed on a first side of the construction element for the first fire-retardant element and on a second side of the construction element for the second fire-retardant element, so that the opening in the construction element is sealed in fire-retardant manner from both sides thereof. A conduit passage in a construction element is hereby fire-proofed in accordance with current regulations, such that on each of the sides of the construction element fire is retarded thereby.

The present invention will be further discussed below with reference to a set of figures, wherein:
Figure 1 shows a wall passage of a conduit with a fire-retardant finish, wherein a part of the wall has been omitted by way of illustration;
Figure 2 shows a perspective front view of a fire-retardant element;
Figure 3 shows a perspective rear view of a fire-retardant element;
Figure 4 shows a front view of a fire-retardant element;
Figure 5 shows a rear view of a fire-retardant element;
Figure 6A and Figure 6B show schematically the installation of a fire-retardant element around a conduit element;
Figure 7 shows a wall passage of a conduit without fire-retardant element; and
Figure 8 shows a wall passage of a conduit according to Figure 7 wherein a fire-retardant element is mounted.

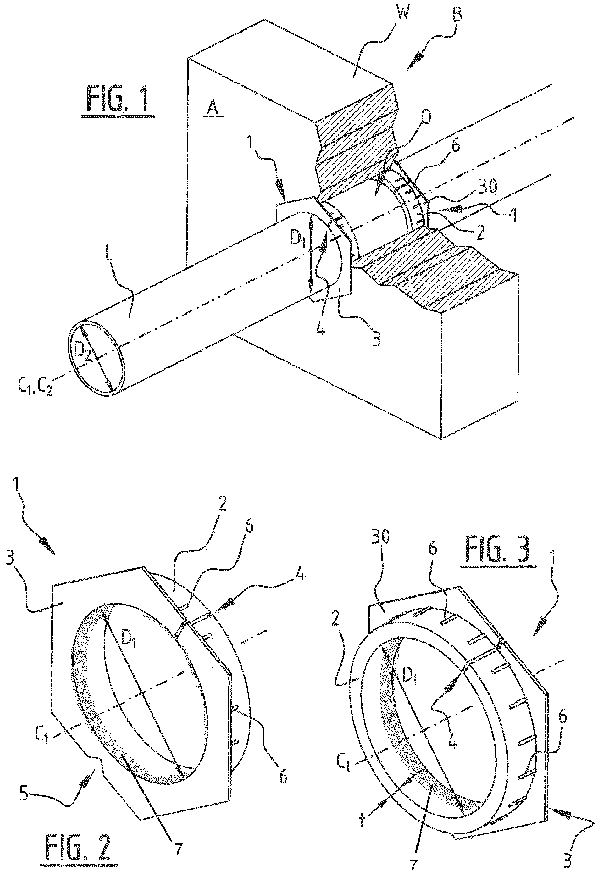

Figure 1 shows a the construction element, i.e. a wall W with an opening O through which a conduit L has been passed. In the drawing the wall W has been cut away partially so that the conduit L and the arranged fire-retardant elements 1 (also referred to as fire-retardant collar 1) are more clearly visible. The fire-retardant collars 1 are arranged around the conduit L such that they connect closely thereto. They are also pressed into a space between the wall W and the conduit L for the purpose of firstly closing the opening O therewith, and also to make the opening O fire-resistant. This is because the collars 1 are manufactured from an intumescent material which foams when heated. If the conduit L were for instance to melt in the case of fire, the foaming intumescent material can close the opening O in the wall W (or other construction element). Spreading of the fire from the space on the front side A of the wall W to the space on the rear side B of the wall W is hereby inhibited in effective manner.

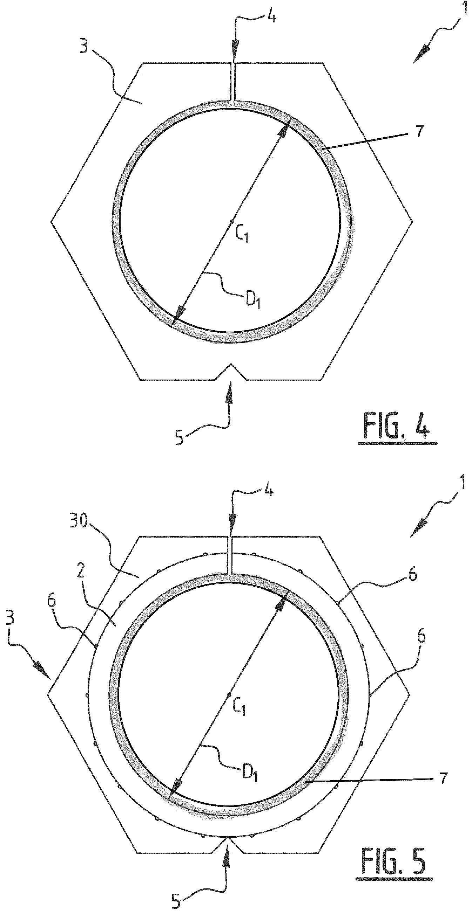

Figures 2 and 3 show respectively a perspective front view and a perspective rear view of a fire-retardant element 1 (i.e. fire-retardant collar 1), and Figures 4 and 5 show respectively a front view and a rear view of the fire-retardant element 1.

The collar 1 is constructed from a wall-shaped part 2 and a flange 3. The collar 1 is interrupted at one position by means of a cut 4. The intumescent material from which the collar 1 is preferably integrally formed is also flexible, for instance in that it comprises inter alia an elastomer. The collar 1 can be bent apart by means of the flexible material and the cut 4. This makes it possible to arrange the collar 1 on an already installed conduit L.

The flange 3 completely seals any space between the collar 1 and the wall W (or other construction element). Following installation of the collar 1, the rear side 30 of the flange 3 lies against the relevant construction element, such as the wall W in Figure 1. A V-shaped notch 5 is also arranged in the flange 3, at a position opposite the cut 4. The notch 5 functions as a pivot point for the collar 1 when it is bent apart, since the flange 3 has a lower resistance to bending at the position of the notch 5.

Following installation around a conduit L, the wall-shaped part 2 of the collar 1 lies against this conduit L. The inner diameter D₁ of the collar 1 is therefore chosen such that it corresponds substantially with the outer diameter D₂ of the conduit L on which the collar 1 must be arranged. The central axis C₁ of the wall-shaped part 2 is substantially coaxial with the central axis C₂ of the conduit L. The wall W extends substantially parallel to the central axis C₁ of the collar 1 and - following installation - to the central axis C₂ of the conduit L. The inner diameter D₁ of the collar is substantially constant. The thickness t of the wall-shaped part 2 can optionally have a variation. The thickness t of the wall-shaped part 2 is preferably greatest at the outer end connected to the flange 3, and smallest at the other outer end protruding furthest into the wall W following installation. Due to such a variation in thickness t of the wall-shaped part 2, the clamping force of the collar 1 increases gradually as it is inserted further into the opening O, between the conduit L and the construction element (e.g. wall W).

In order also to increase the clamping force without having the required installation force increase too much the wall-shaped part 2 can be provided with protrusions 6 which extend parallel to the central axis C₁. These protrusions 6 are also manufactured integrally with the rest of the collar 1, and are therefore also made of flexible intumescent material.

The wall-shaped part 2 can also be provided on its inner surface with a seal 7, which can for instance be made of rubber or an elastomer, in order to provide a better seal between the wall-shaped part 2 and the conduit L, so that gases and/or smoke are prevented from leaking therebetween. In the present embodiment the seal 7 is provided around the whole inner periphery of the wall-shaped part 2, but only a part of the inner surface of the wall-shaped part 2 is provided with the seal 7. By providing only a part of the inner surface of the wall-shaped part 2 installation of the collar 1 is not needlessly impeded due to friction between the wall-shaped part 2 and the conduit L. This also saves on sealing material.

A rear side 30 of the flange 3 can also be provided with a sealing material (not shown). The outer surface of the wall-shaped part 2 can additionally or alternatively be provided with a sealing material (not shown). This prevents leaking of gases and/or smoke between the wall W and the collar 1.

In the shown embodiment of the collar 1 in the drawings the flange 3 has a hexagonal outer periphery. A hexagon is an efficient shape for filling a surface, this being advantageous for the manufacture of a plurality of collars 1 in one manufacturing step, but also for storage of the collars 1.

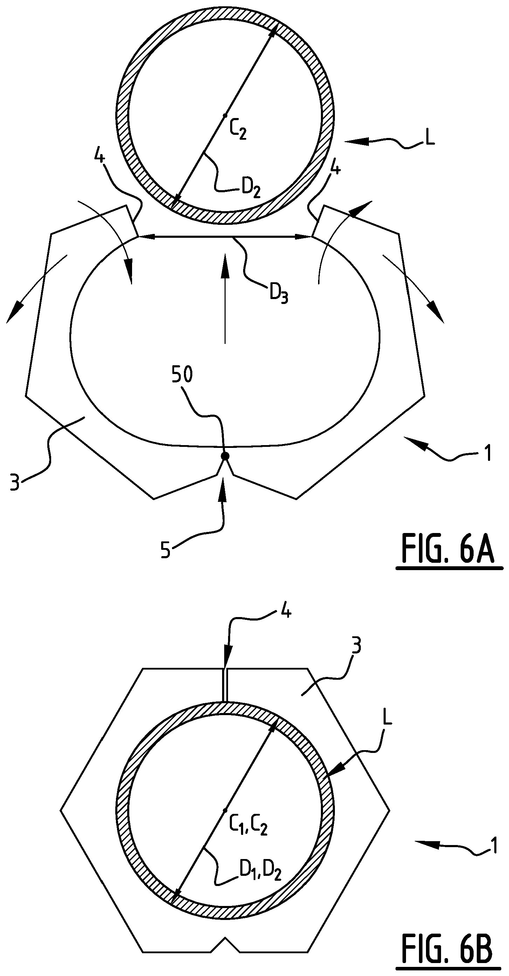

Figures 6A and 6B show a method for installing a fire-retardant collar 1 around a conduit L.

Figure 6A shows that the collar 1 can be bent apart owing to the cut 4 through the collar 1, wherein the collar 1 bends apart round a pivot point 50 formed by a notch 5 in the flange 3. At the position of the cut 4 the collar 1 is bent apart such that a passage size D₃ is realized which is greater than the outer diameter D₂ of the conduit L around which the collar 1 must be placed.

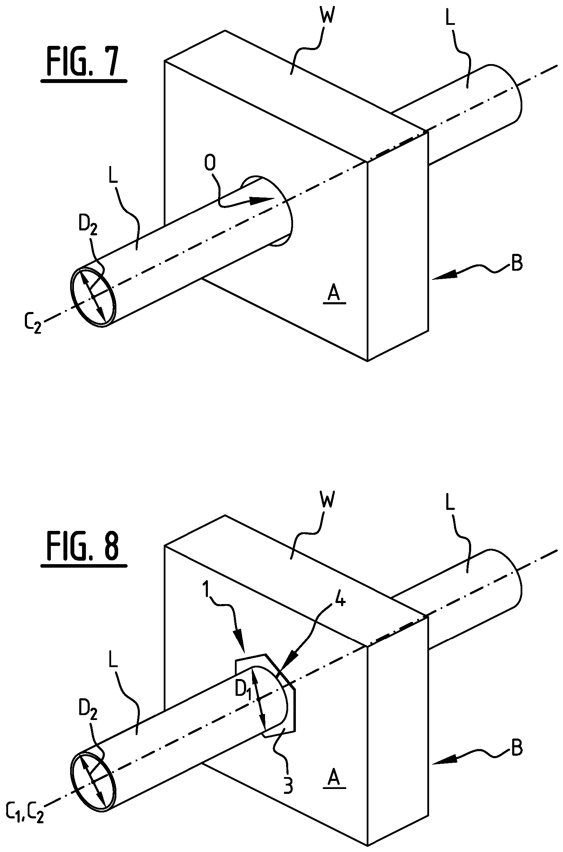

In Figure 6B the collar 1 has been placed around the conduit L and the first step of the installation of the collar 1 has been completed. As can be seen, the collar 1 is arranged coaxially with the conduit L, and the inner diameter D₁ of the collar 1 corresponds substantially with the outer diameter D₂ of the conduit L. Following installation of the collar 1 around the conduit L the collar 1 is pressed down into the opening O in the construction element (e.g. wall W) through which the conduit L runs. This step of pressing down is not shown here. The collar 1 is pressed down such that the flange 3 preferably lies against the outer surface of the construction element, as can for instance be seen in Figures 1 and 8.

Finally, Figures 7 and 8 show respectively a wall passage of a conduit L prior to installation of a fire-retardant collar 1 and the wall passage of Figure 7 following installation of the fire-retardant collar 1.

The embodiments of aspects of the present invention shown in the figures serve only by way of illustration and in no way limit the scope of protection of the appended claims.

## Claims

1. Fire-retardant element (1) for sealing an opening (O) in a construction element (W) in the case of fire, comprising:
a collar (1) which is manufactured integrally from an intumescent material and is configured to be placed around a conduit element (L), wherein the conduit element (L) runs through the opening (O) of the construction element (W),
wherein the intumescent material is flexible and the collar (1) comprises an interruption (4) along its periphery, such that the collar (1) can be bent apart and can be placed around the conduit element (L), and
wherein the collar (1) comprises a wall-shaped part (2) along at least a part of its inner periphery, which lies against the conduit element (L) during use, wherein the wall-shaped part (2) extends in a direction substantially parallel to a longitudinal direction of the conduit element (L) so that, in use of the fire-retardant element (1), the wall-shaped part (2) extends in the opening (O) of the construction element (W) between the construction element (W) and the conduit element (L) in order to fix the fire-retardant element (1) clampingly in the construction element (W) and against the conduit element (L).

2. Fire-retardant element (1) according to claim 1, wherein the wall-shaped part (2) extends along the whole inner periphery of the collar (1).

3. Fire-retardant element (1) according to claim 1 or 2, wherein the intumescent material comprises at least one of graphite and sodium silicate.

4. Fire-retardant element (1) according to any one of the foregoing claims, wherein the wall-shaped part (2) comprises on its outer side one or more protrusions (6) along its outer periphery.

5. Fire-retardant element (1) according to claim 4, wherein the one or more protrusions (6) are elongate protrusions (6), and wherein the longitudinal direction of the one or more elongate protrusions (6) runs substantially parallel to the longitudinal direction of the conduit element (L).

6. Fire-retardant element (1) according to claim 4 or 5, wherein a plurality of the one or more protrusions (6) are arranged around the outer periphery of the wall-shaped part (2) at regular mutual distances.

7. Fire-retardant element (1) according to any one of the foregoing claims, wherein the collar (1) comprises a flange (3) which extends outward from the wall-shaped part (2) in radial direction of the wall-shaped part (2).

8. Fire-retardant element (1) according to claim 7, wherein in use of the fire-retardant element (1) the flange (3) lies flat against the construction element (W) in order to seal a possible space between the wall-shaped part (2) of the collar (1) and the construction element (W).

9. Fire-retardant element (1) according to claim 7 or 8, wherein the flange (3) comprises a notch (5) in order to enable bending apart of the collar (1) at the position of the notch (5), such that the collar (1) can be bent apart and can be placed around the conduit element (L).

10. Fire-retardant element (1) according to any one of the claims 7 - 9, wherein the outer periphery of the flange (3) is hexagonal.

11. Fire-retardant element (1) according to any one of the foregoing claims, wherein the inner periphery of the wall-shaped part (2) is substantially round, such that the fire-retardant element (1) can be arranged fittingly around a round conduit element (L).

12. Fire-retardant element (1) according to any one of the foregoing claims, wherein an inner diameter of the wall-shaped part (2) corresponds substantially with an outer diameter of the conduit element (L).

13. Fire-retardant element (1) according to any one of the foregoing claims, wherein at least a part of the inner surface of the wall-shaped part is provided along at least a part of its inner periphery with a sealing material, such as rubber or an elastomer.

14. Method for feeding a conduit element (L) through a construction element (W), comprising the steps of:
arranging an opening (O) in the construction element (W);
feeding a conduit element (L) through the arranged opening (O), wherein an outer diameter (D₂) of the conduit element (L) is smaller than a diameter of the opening (O), such that a gap is formed between the arranged opening (O) and the conduit element (L);
providing a fire-retardant element (1) according to any one of the claims 1 - 13;
bending apart the fire-retardant element (1) and subsequently placing it around the conduit element (L);
pressing down the fire-retardant element (1) toward the construction element (W), such that the wall-shaped part (2) makes its way into the opening (O) between the construction element (W) and the conduit element (L).

15. Method according to claim 14, wherein:
providing the fire-retardant element (1) comprises of providing a fire-retardant element (1) according to any one of the claims 7 - 10, and wherein the step of pressing down the fire-retardant element (1) is performed such that the flange (3) lies flat against the construction element (W); and/or
providing, bending apart and pressing down of the fire-retardant element (1) are performed manually; and/or
the step of providing the fire-retardant element (1) comprises of providing a first fire-retardant element (1) and a second fire-retardant element (1), and wherein the steps of providing, bending apart and pressing down are performed on a first side (A) of the construction element (W) for the first fire-retardant element (1) and on a second side (B) of the construction element (W) for the second fire-retardant element (1), so that the opening (O) in the construction element (W) is sealed in fire-retardant manner from both sides (A, B) thereof.
